(19) Europäisches Patentamt

European Patent Office

Office européen des brevets

(11) **EP 1 397 930 B1**

(12) **EUROPEAN PATENT SPECIFICATION**

(45) Date of publication and mention
of the grant of the patent:
**22.08.2007 Bulletin 2007/34**

(21) Application number: **01941353.3**

(22) Date of filing: **31.05.2001**

(51) Int Cl.:
*H04Q 7/38* (2006.01)  *H04Q 7/36* (2006.01)

(86) International application number:
**PCT/SE2001/001237**

(87) International publication number:
**WO 2002/098160 (05.12.2002 Gazette 2002/49)**

(54) **METHOD AND ARRANGEMENT AND COMPUTER PROGRAM PODUCT FOR DETERMINING CRITERIONS FOR SELECTION OF AN APPROPRIATE CELL LAYER FOR A USER EQUIPMENT AND FOR REDUCING THE NUMBER OF INTER-FREQUENCY HARD HANDOVERS FOR THE USER EQUIPMENT**

VERFAHREN UND ANORDNUNG UND COMPUTERPROGRAMMPRODUKT ZUR BESTIMMUNG VON KRITERIEN ZUR AUSWAHL EINER ENTSPRECHENDEN ZELLENSCHICHT FÜR EIN BENUTZERGERÄT UND ZUR VERRINGERUNG DER ANZAHL VON HARTEN ZWISCHENFREQUENZWEITERREICHUNGEN FÜR DAS BENUTZERGERÄT

PROCEDE, ENSEMBLE ET PROGRAMME INFORMATIQUE PERMETTANT DE DETERMINER DES CRITERES DE SELECTION D'UNE COUCHE CELLULAIRE APPROPRIEE POUR UN EQUIPEMENT UTILISATEUR ET DE REDUIRE LE NOMBRE DE TRANSFERTS INTERCELLULAIRES AVEC COUPURE (HARD HANDOVERS) INTER-FREQUENCES POUR CET EQUIPEMENT UTILISATEUR

(84) Designated Contracting States:
**AT BE CH CY DE DK ES FI FR GB GR IE IT LI LU MC NL PT SE TR**

(43) Date of publication of application:
**17.03.2004 Bulletin 2004/12**

(73) Proprietor: **TELEFONAKTIEBOLAGET LM ERICSSON (publ)**
**164 83 Stockholm (SE)**

(72) Inventors:
• **JANNOK, Daniel**
**S-972 34 Lulea (SE)**

• **JOHANSSON, Staffan**
**S-974 55 Lulea (SE)**

(74) Representative: **Sjöberg, Mats Hakan**
**Ericsson AB**
**Patent Department**
**164 80 Stockholm (SE)**

(56) References cited:
**EP-A1- 0 562 743**   **EP-A2- 0 888 026**
**EP-A2- 1 014 107**   **SE-B- 468 696**

**Description**

**FIELD OF THE INVENTION**

The present invention relates to a method and arrangement in a communication system, in particular to the initial selection of a cell that is part of a layered cell structure by means of at least two selection criterions.

Method and Arrangement in a Telecommunication System

**BACKGROUND OF THE INVENTION**

Modern radio-based communication networks are normally designed as cellular networks. This implies that a geographical area is subdivided into a plurality of cells such that various kinds of communication services can be provided to user equipments that move around in this area. The radio-related aspects of the communication to or from the user equipments are handled by help of network equipment, e.g. radio base stations, radio network controller, or other units as need arise. Basically, a radio base station covers an area around itself. When placing a plurality of such radio base stations such that a continuous area is covered without any gaps the coverage areas of the radio base stations will partly overlap each other which leads to the known idealised coverage pattern consisting of hexagonal cells.

Cell planning must be done with care and consider a variety of aspects, e.g. the topology of the area that is to be covered and the expected number of user equipments that a cell must be able to serve at the same time. Other aspects relate to the roaming behaviour and the time-related load distribution in the cell. These and other aspects will have an influence on, e.g., cell shape, cell size and cell capacity. When applying a long-term perspective network and cell planning should also prepare for an increase of the network capacity or adaptations of a network for new services or changed behaviour of the user equipments.

However, it is obviously difficult to plan and adjust a network such that all these partly contradictory aspects are sufficiently fulfilled. One possible solution for a network operator to combine said contradictory aspects is to cover at least parts of the same geographical area by several distinct layers of cells, e.g., applying different carrier frequency bands. By this means the network capacity can locally be increased, e.g. in order to meet an unproportionally higher increase of the traffic density or in order to offer more advanced services which imply an increased use of the network capacity. In these cases the complete network structure will probably consist of a first layer of cells offering a full coverage and additional layers that consists of minor islands of cells that are intended to meet local requirements.

A problem with this solution is, however, that a roaming user equipment in an area that is covered by several distinct cell layers can be a subject for inter-frequency hard handovers, i.e. the user equipment roams from a cell on a first cell layer to a cell on a second cell layer. This has a negative impact on both the network and the user equipment, because inter-frequency handovers result in short interruptions of the user data stream and, thus, a temporary decreased quality of the communication connection for the user equipments and additional signalling traffic and load for the network.

The document EP 0 888 026 A2 discloses a base station in a cellular radio system that transmits certain information describing its neighbouring cells in an information field to a mobile station. The mobile station can then use this information for a cell re-selection based on the quality of service that the mobile station assumes to need for its connection.

The document EP 1 014 107 A2 discloses a mobile cellular communication system comprising a plurality of microcells and overlaid macrocells.

**SUMMARY OF THE INVENTION**

It has been observed to be a problem in a communication system that consists of several layers of cells that are distinct by means of different carrier frequency bands to determine appropriate selection criterions for the selection of an appropriate cell layer for a user equipment. It is another problem that the number of inter-frequency hard handovers increases for user equipments that move between cells on different cell layers in such a cell structure.

It is therefore an object of the present invention to achieve a method for selecting an initial cell layer in accordance with at least two selection criterions in order to achieve a cost-efficient use of the network resources and a reduction of the number of inter-frequency hard handovers.

This is advantageously solved by the teaching of claims 1-4.

It is another object of the present invention to achieve an arrangement in the communication network that performs the method as described above.

This is advantageously solved by the teaching of claim 5.

Briefly, these objects of the present invention are accomplished by the inventive method comprising the steps of determining a candidate cell on one of several available cell layers such that a cost function is minimised and validating this selection, e.g., by means of an indicator that additionally considers the roaming behaviour of the user equipment with regard to the coverage area of the cells on the same cell layer.

A first advantage of the present invention is a reduction of a costs function that bases on the load distribution in the cells on the various cell layers can be reduced.

It is another advantage of the present invention that the number of inter-frequency hard handovers for user equipments that move in an area that is covered by a layered cell structure can be reduced.

Other objects, advantages and novel features of the invention will become apparent from the following detailed description of the invention when considered in conjunction with the accompanying drawings and claims.

## BRIEF DESCRIPTION OF THE DRAWINGS

For a better understanding, reference is made to the following drawings and preferred embodiments of the invention.

Figure 1 shows an overview of a cell structure comprising a plurality of cells that are arranged on two distinct cell layers, which both cover the same geographical area.

Figure 2 shows for two cells on two distinct layers a diagram that shows the load distribution in each of said cells versus the total load in both cells.

Figure 3 illustrates the definition of neighbour coverage angel $\alpha$ that is applied for the calculation of the neighbour coverage indicator NCli for cell $C_i$.

Figure 4a and 4b illustrate by means of an example parameters that have an influence on the probability for a handover of a user equipment.

Figure 5 shows a diagram of a roaming indicator p in relation to the neighbour coverage indicator NCli and the handover probability.

Figure 6 shows a flowchart that illustrates the steps of the method according to the present invention.

Figure 7 shows an overview of a cell structure comprising two distinct cell layers, each of which being indicated by two example cells, and the arrangements in the network and, optionally, the user equipment that are necessary to perform the method according to the present invention.

Figure 8 shows in greater detail the arrangement in the network that performs the method according to the present invention.

Figure 9 shows the optional arrangement in the user equipment that can be applied in connection with the method according to the present invention.

## DETAILED DESCRIPTION

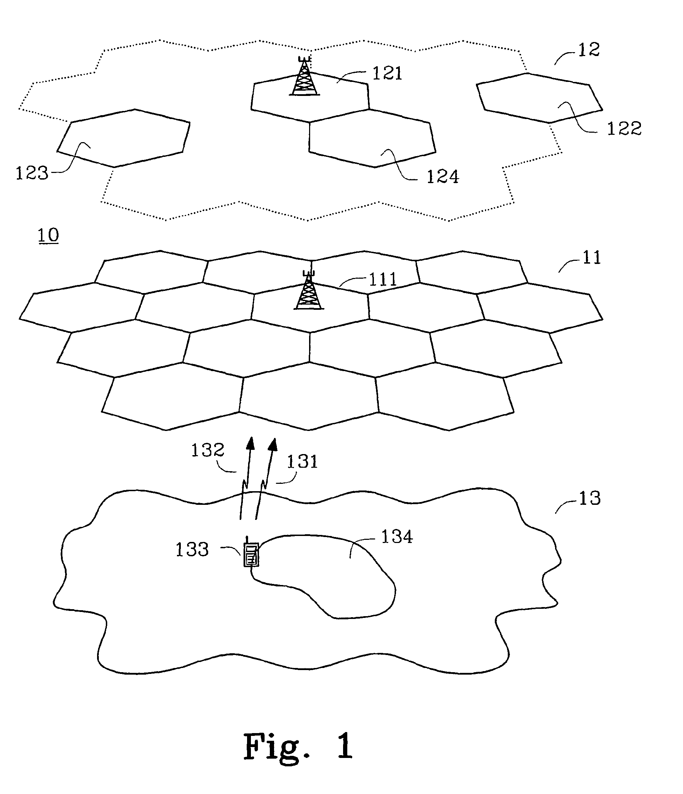

Figure 1 shows a part of a cellular communication network 10 that covers a certain geographical area 13 and provides communication services to a plurality of user equipments 133 within this area. In this example, said area is completely covered by a first cell layer 11 having a first frequency band $f_1$ assigned as the carrier frequency for communication. Additionally, certain parts of said area 13 are simultaneously covered by a second cell layer 12 applying a second frequency band $f_2$ assigned. The additional coverage may be necessary, e.g., due to an expectable high amount of communication traffic within such areas or due to the use of services that locally demand high amounts of network resources. In this example, the second cell layer 12 covers additionally two minor hot-spot areas 122,123 and one major area 124. For the sake of simplicity the cells on both cell layers 11,12 have the same size. However, it is notwithstanding possible to apply the method and arrangement according to the present invention in case of overlapping cell layers containing cells of different shapes, e.g. consisting of pico-cells that only cover a very limited area or consisting of cells that have a special shape in order to conform with special requirements, e.g. long narrow cells along traffic routes.

The method and arrangement according to the present invention address in particular the problem of initially selecting an appropriate cell layer for a user equipment 133 that enters an area 134 consisting of cells 1111,121 that are each served by a radio base station using different frequency bands and, thus, offering several alternatives 131,132 for a call setup on one of the cell layers. For a network operator that supports more than one cell layer the selection can be optimised, e.g., with respect to a cost-efficient utilisation of the network facilities or with regard to the service quality that can be offered to a user equipment. On the other hand, for a user equipment that can access several cell layers belonging to different network operators the selection can imply an optimisation, e.g., with respect to offering and pricing of communication services from the various network operators.

The mobility of user equipments 133 between cells that belong to the same cell layer 11, e.g. applying a first frequency band, is supported by means of soft handovers. However, a roaming of a user equipment 133 that implies a change to a cell on an other cell layer 12, e.g. using a second frequency band, will cause an inter-frequency hard handover, which will lead to an increased signalling traffic and delays in the network on the one hand and, on the other hand, to temporary disturbances in the communication connection of the user equipment, i.e. short interruptions of the user data stream. The present invention addresses a method for selecting a cell on one of several available cell layers 11,12, either for initiating a new call setup or for a user equipment that already has an established communication connection and roams in a network 10 comprising said layered cell structure. The method according to the present invention intends to achieve a cost-efficient use of the total system capacity, i.e. to use the available frequency bands as efficient as possible, while at the same time minimising the processing delays and avoiding possible call disturbances, e.g. due to a too high number of inter-frequency hard handovers.

The following will describe the two basic aspects that are used in the method and arrangement according to the present invention. Said method is performed mainly with focus on two characteristics of the cells: One characteristic is the load of the cells on the various cell layers that cover the same area and the other characteristic is the neighbour area of cells that apply the same frequency band in relation to the roaming behaviour of the user equipments. These characteristics are used in order to select an initial cell layer and a cell to which a user equipment can be assigned.

With regard to the first characteristic, the user equipments should be distributed on the cells of the various layers such that a cost function is minimised. The cost function is represented as a function of the cell load where the costs to include an additional user equipment to a cell will increase proportionally to the cell load. Cells that cover at least partly the same geographical area but on different cell layers are regarded as a selection set for a user equipment that intends to establish a communication connection in said area. One problem that is addressed by the method according to the present invention is how a total number N of user equipments can be distributed among the cells of the selection set such that a load-depending cost function for these cells can be minimised.

When assuming that each of the cells $C_i$ to which a user equipment could be connected can serve a maximum number of $N_{i,max}$ user equipments and momentarily serves a number $n_i$ of user equipments the cell load can be defined as $n_i/N_{i,max}$. The number of user equipments $n_i$ and $N_{i,max}$ are defined as a number of voice equivalents in order to consider the fact that user equipments can contribute to the cell load to various degrees, e.g., depending on the applied type of service. When defining a cost function with respect to the total load N and the load $n_i$ in the available cells on each cell layer the optimal distribution of user equipments results from the equations

$$\frac{\partial \cos t(n_1,...,n_l)}{\partial n_i} = 0 \ \text{ and } \ \sum_i n_i = N \ .$$

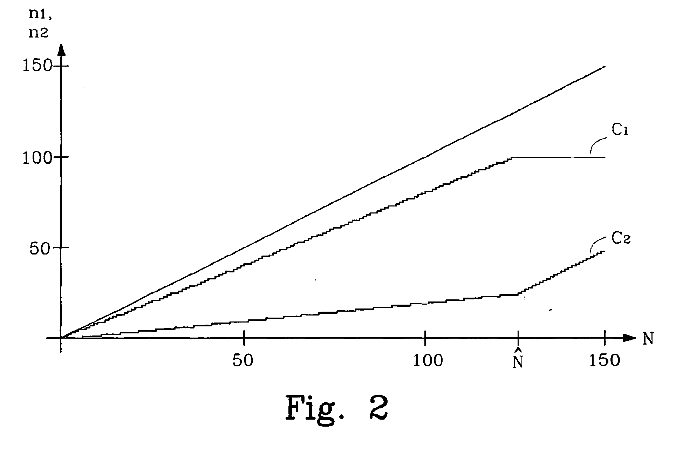

This will now be illustrated by means of the diagram in figure 2. Said figure assumes an area that is covered by two cell structures where a cell $C_1$ can serve a maximum number $N_{1,max}=100$ of user equipments and cell $C_2$ can serve a maximum number $N_{2,max}=50$. As shown in the diagram the cost function for a given total load N will in this example have its minimum for a load distribution $n_1(N)=\alpha_1*N$ for cell C1 and $n_2(N)=\alpha_2*N$ for cell C2 with $(\alpha_1+\alpha_2)=1$. This distribution is applicable as long as it is theoretically possible to allocate new user equipments to either one of these cells, i.e. for a total

load $N < \hat{N}$. Otherwise, cells must be selected amongst those cells that still are capable to include an additional user equipment.

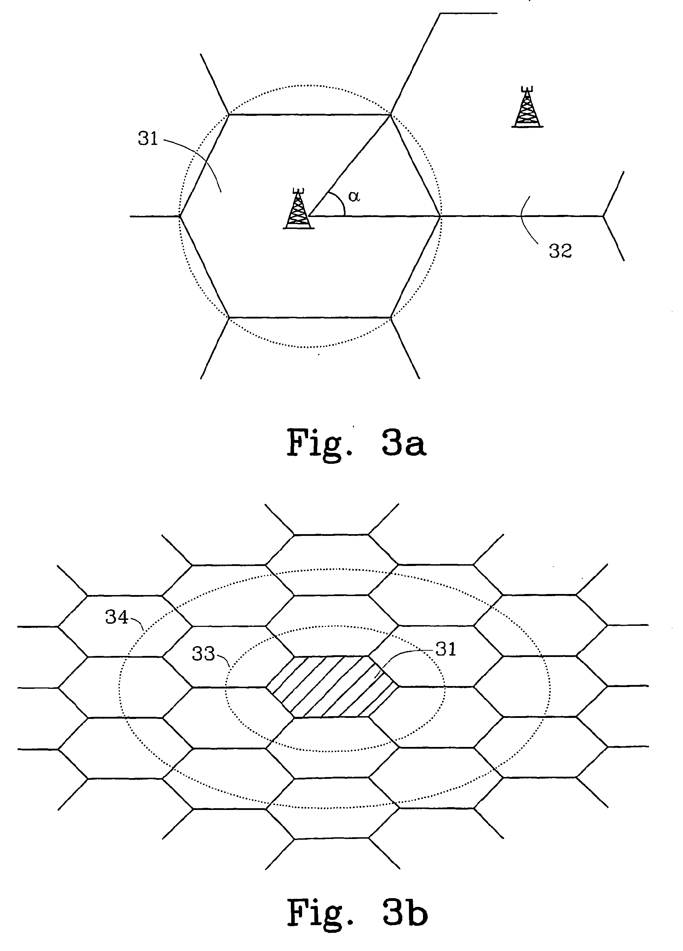

The second characteristic can be described by help of a neighbour cell coverage indicator NCIi that is assigned to each cell $C_i$. This indicator describes the influence of existing neighbour cells on the same cell layer for the selection of that layer. Figure 3 demonstrates a simplified method to calculate the neighbour coverage indicator. This figure only accounts the direct neighbours of a cell $C_i$ and said indicator is defined as the ratio between an angel $\alpha$ of the cell sector where the cell has neighbour cells to which it can perform a soft handover and the angel of entire circumference, i.e. $2\pi$. For a hexagon cell 31, as shown in figure 3, each neighbour cell 32 contributes with an angel $\alpha=(\pi/3)$ to the coverage indicator. In other words, each neighbour cell contributes to the neighbour coverage indicator NCIi with a summand $\alpha/2\pi=1/6$. Figure 3b shows that, in general, neighbour cells of a cell 31 are not only the direct neighbour cells as represented by a first ring 33 around the cell 31 but also the neighbour cells of the cells on said first ring, which are indicated by a second ring 34. The set of neighbour cells is thus merely determined by the number of cells to which a user equipment is synchronised with regard to the existing radio propagation conditions. The set includes cells on said first and second ring 33,34 or even further cells outside this area. As a user equipment can measure on a certain standardised maximum number of neighbour cells, the neighbour coverage index can be defined as the ratio between the number of neighbour cells that the user equipment measures on and said maximum number.

The neighbour coverage indicator is thus defined within a range [0,1] where 0 denotes a hot-spot cell without any neighbour cell and 1 denotes a cell that is completely surrounded by cells to which a user equipment can perform a handover. This indicator gets its main importance from the fact that a cell selection in order to minimise a cost function with respect to the load distribution does not care about the cell coverage in the neighbourhood of a selected cell, which becomes important for user equipments that have an assumed high mobility such that they probably will perform a handover.

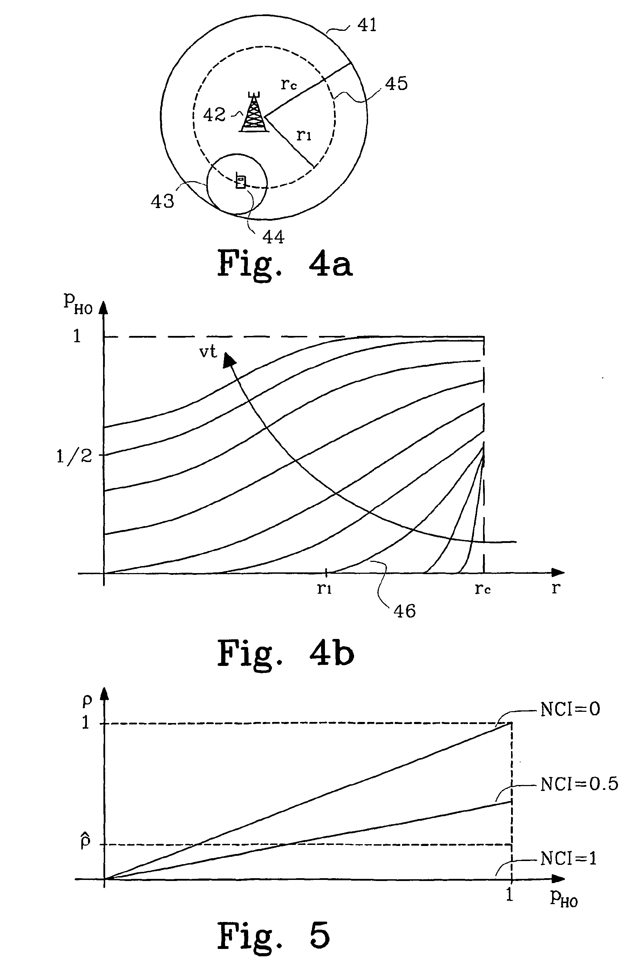

The probability pHO for a handover is mainly determined by the parameters call length and the mobility of a user equipment. This will now be described by help of figure 4. When assuming a voice call having an average call length of t=90s with an average mobility v=50km/h a user equipment will move within an area that can be described by a circle with radius vt=1,25km around the place where the user equipment has started the communication. Figure 4a shows a cell 41 that is served by a radio base station 42 wherein the movement area 43 of a user equipment 44 is assumed to be small compared to the cell area 41. Apparently, the user equipment 44 in said cell 41 need not to perform a handover to a neighbour cell if it starts a communication within an area 45 with a radius $r_i=r_c$-vt. A user equipment 44 that starts a communication within said cell area 41 but outside the area 45 will be affected by an increasing handover probability $P_{HO}$.

Said probability increases on the one hand depending on the position where in the cell 41 the user equipment 44 starts its communication and on the other hand depending on the expected movement area 43 of the user equipment 44. This is now demonstrated by help of the diagram in figure 4b. Said diagram shows a field of curves representing the handover probability pHO for a user equipment 44 versus the position r within the cell 41, i.e. the distance to the radio base station 42, where said user equipment 44 starts a communication. The field parameter denotes the expected movement area of the user equipment 44 which is characterised by the product of mobility v and call length t as described above. The curve 46 shows the handover probability for a user equipment 44 as shown in figure 4a having a movement area 43 that is small compared to the cell area 41. As long as the user equipment starts a communication at a distance that is less than $r_1=r_c$-vt no handover will occur, i.e. the handover probability is pHO=0.

For starting points beyond this area the handover probability $p_{HO}$ will increase and for a the call setup that occurs at the cell border, i.e. at a distance $r_c$ from the radio base station 42, approach a value that is slightly larger than 0.5.

Apparently, a larger movement area 43 of the user equipment 44, i.e. an increasing mobility and/or call length, will also have an impact on the handover probability $p_{HO}$ due to the fact that the area 45 with handover probability pHO=0, which is characterised by the radius $r_1=r_c$-vt, will decrease correspondingly. If the movement area 43 corresponds to the cell area 41, a handover will not occur only if the user equipment 44 sets up a call from the mid-point of the cell. For even larger movement areas, i.e. an increasing product vt, there is a certain handover probability $p_{HO}$ at any position within the cell area 41.

It should be clearly stated that the calculation of the handover probabilities of user equipments as described above only serves as an example to elucidate some influences that have an impact of said probabilities. Other impacts could result, e.g., from the type of service that the user equipment actually applies. It is free to the network operator to apply a suitable estimation method for the handover probability of a user equipment in one of the cells of such a network. However, from figures 3a and 3b it becomes apparent that the handover probability pHO must have a major influence on the weighting of the neighbour cell coverage index $NCI_i$ as defined above.

As mentioned above, it is an object of the method according to the present invention to optimise the network utilisation not only by minimising costs that depend on the load distribution in the cells on the various available cell layers but also to minimise costs that result from a hard handover. A cost estimation for hard handovers can be derived by means of a roaming indictor ρ that is defined as

$$\rho_i = p_{HO} \cdot (1 - NCI_i) \ .$$

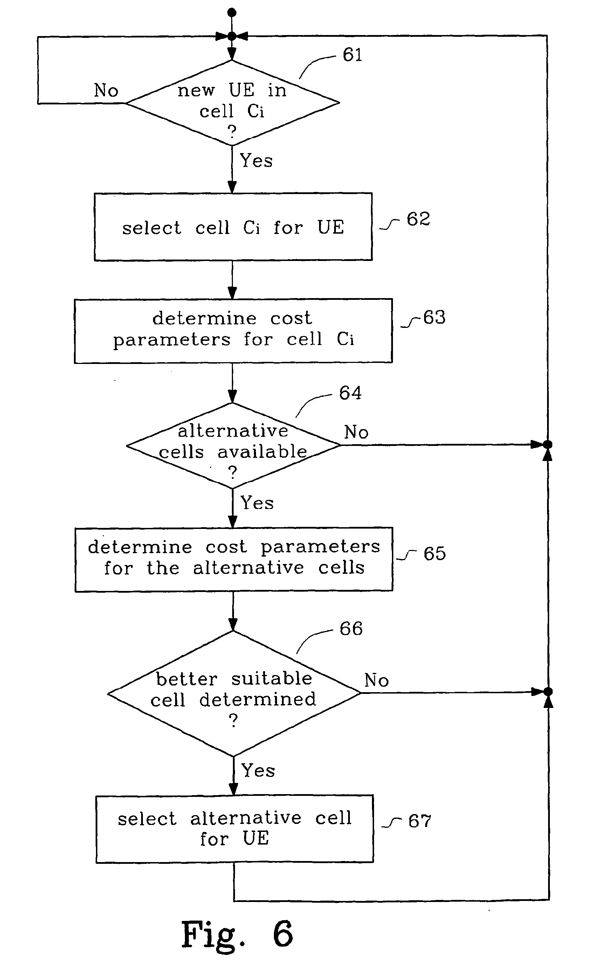

Apparently, the importance of the roaming behaviour of a user equipment as described by said roaming indicator ρ will increase for an increasing handover probability $p_{HO}$ on the one hand and for a decreasing neighbour coverage index NCIi on the other hand: As long as the handover probability pHO remains low, or even zero, the neighbour coverage is of no importance because the user equipment will probably not perform any handover. Correspondingly, as long as the neighbour coverage index is high, or even 1, a handover can be performed without the deficiencies, e.g. caused by a hard handover. This is visualised by help of the diagram in figure 5 which shows the roaming indicator ρ versus the handover probability for several neighbour coverage indicators NCIi. The roaming indicator can be applied, e.g., to confirm that a selected cell for a call setup of a certain user equipment is acceptable with regard to the probability for hard handovers. This will be explained in greater detail in connection with the flowchart in figure 6.

Figure 6 shows a flowchart that describes in greater detail the steps of the method according to the present invention in order to perform an initial selection of a cell on one of several available cell layers for a new user equipment. If a new user equipment enters this area, block 61 Yes, it is preliminarily connected to a cell $C_i$ on one the various cell layers, block 62. Then, block 63, the cost parameters that result from the applied cost criterions are calculated. In the example as described above the cost criterions from which said cost parameters are calculated are the cell load and the roaming indicator. However, it is possible to apply additional user or network related cost criterions. In a next step, block 64, it is investigated whether there are alternative cells on other cell layers to which the user equipment also could establish a connection. If such alternative cells are available, block 64 Yes, the cost parameters as explained above are also calculated for each of said alternative cells, block 65. It is now up to the network operator to decide from the cost parameters of each cell whether one of the alternative cells is better suitable for the user equipment, block 66. If such a cell is determined, block 66 Yes, the user equipment is connected to this cell, block 67. Otherwise, block 66 No, the user equipment remains connected to the originally selected cell Ci.

As mentioned above, it is up to the network operator to determine a best suitable cell from the cost parameters that are retrieved by applying the cost criterions.

Regarding the cell load criterion the user equipments should be distributed on the available cell layers such that a cost function, which depends on the cell load can be minimised. For this purpose, the actual load distribution of the total load N on the available cells can, e.g., be compared to the ideal load distribution as shown in figure 2. A deviation indicator can be determined For each of the cell alternatives by means of calculating the actual load as a percentage on the ideal load where a deviation indicator larger than one indicates a load excess, i.e. the number of user equipments in the cell is higher than the optimal load prescribes, and a deviation indicator less than one indicates a load deficit, i.e. the number of user equipments in the cell is lower than the optimal load prescribes. Then it is possible to apply said deviation as the cost parameter for the cell load criterion.

It is an essential part of the method according to the present invention that the selection of one of the available cells on the various cell layers does not only depend on one single cost criterion but is also validated by further criterions. The roaming indicator criterion, e.g., defines a connection between the cell coverage on a cell layer on the one hand and the roaming behaviour of the user equipment on the other hand. The influence of said criterion on the cost parameter is definable by the operator, e.g., by means of comparing said roaming indicator with an operator-definable threshold value $\hat{\rho}$ where a roaming indicator that is above said threshold value implies a higher cost parameter with respect to this cost criterion. For an increasing load in the cells of the layered cell structure, it will be less and less possible to select a cell that optimises all cost parameters. Instead, for an increasing total load the network operator must decide whether to achieve a reasonable use of the network capacity that also guarantees a certain service quality or, alternatively, to achieve a maximised use of the network capacity. The first alternative is a restrictive approach while the second alternative suggests for an increasing load to allocate a user equipment to one of several alternative cells that best suitable in relation to other remaining cells with respect to the cost parameters of these cells. This implies on the other hand that the impact of other selection criterions, e.g. the roaming indicator, must successively decrease for an increasing load. The influence of the roaming indicator, e.g., is subsequently relaxed for an increasing load in the various cells. This could be achieved, e.g., by means of a threshold value $\hat{\rho}$ that increases for an increasing load.

The flowchart as described above only addresses changes on the load distribution due to newly added user equipments. However, it is obvious that the load distribution also changes because of user equipments that leave a cell or terminate a communication connection since the latest user equipment entered the coverage area.

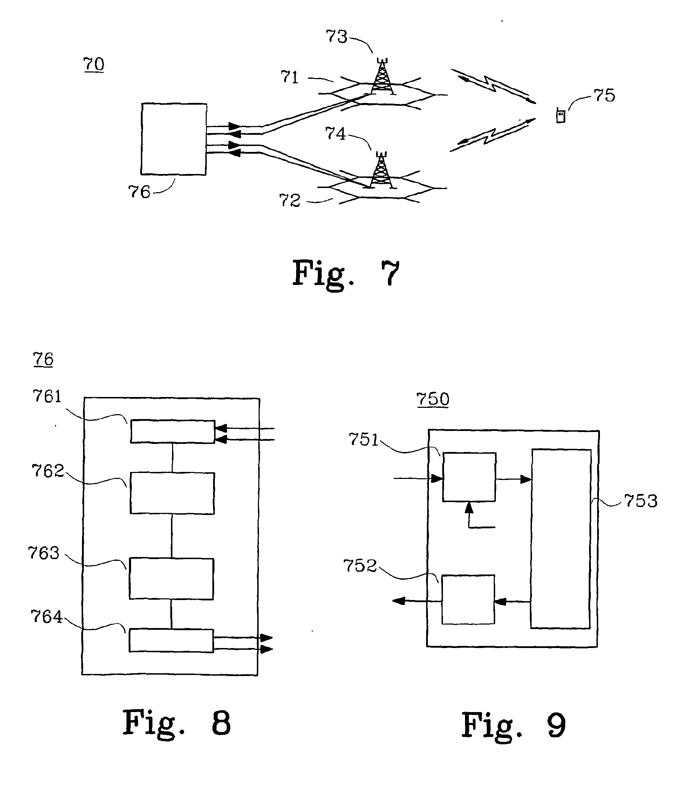

Figure 7 shows a schematic overview of a communication network 70 comprising arrangements 76 at the site of the network operator and, optionally, at the site of the user equipment 75 that are necessary to perform the method according to the present invention. In this example, an area is covered by cells that belong to two different cell layers 71,72 each of which served either by two distinct radio base stations 73,74 or, alternatively, by one radio base station that is capable to serve more than one cell layer by applying different carrier frequencies. The arrangement 76 at the site of the network operator selects a cell layer, i.e. one of the available carrier frequencies, for a user equipment 75 that enters said area. Said selection is done as described above with focus on a cost-efficient use of the network facilities on the one hand and with regard to the roaming behaviour of the user equipment and the cell coverage on a cell layer on the other hand. The arrangement 76 can be located at an appropriate position in the network, e.g. incorporated in the radio network controller, on condition that there are connections from said arrangement 76 to each of the radio base stations of the cells on the various cell layers that cover the same geographical area. This is necessary because the arrangement 76 must be able to receive, e.g., load related information from all those radio base stations in order to select an appropriate cell for a new user equipment. A conceivable location for the arrangement could be the radio network controller.

The arrangement 76 that handles the initial selection of a cell on one of several available cell layers 71,72 is shown in greater detail in figure 8. Said arrangement contains a unit 761 for receiving various cell related information, e.g. regarding cell load or neighbour coverage, and for receiving an indication that a new user equipment enters an area that is covered by more than one cell on various cell layers. The user equipment initially selects one of said cells. On basis of said received information a calculation unit 762 calculates the cost parameters for the cell to which the user equipment has connected and the cell alternatives on each of said cell layers. Then, by help of these cost parameters a selection unit 763 selects an appropriate one of the alternative cells or maintains the initial selection of the user equipment. Finally, a transmission unit 764 transmits the decision of the determined cell back to the user equipment that caused the indication.

As already mentioned above, the behaviour of the user equipment constitutes an important influence on the selection of an appropriate candidate cell. Parameters as call length or user mobility, for instance, will have a strong impact on the weighting of the neighbour coverage index NCIi. When assuming a high probability that a user equipment will move outside the cell area during an established communication connection, i.e. perform a handover, the fact whether the coverage index of this cell is good or bad will be of higher importance than for the case where there is a low probability that a user equipment performs a handover. Other user-related parameters that can have an influence on the initial selection of a cell can relate, e.g., to the preferred usage of services or the subscription type of a user equipment.

Therefore, from the point of view of a system operator it would be beneficial to have access to essential user profile information that facilitates the determination of, e.g., the expectable roaming behaviour of said user equipment. This would allow a more sophisticated decision or confirmation of an initially selected cell on a cell layer. A first possibility, as described above, is the usage of average values, e.g., for call length and user mobility, which allow a rough estimation of the roaming area. However, in order to provide more detailed information of the user equipments it would be necessary that the network must maintain a database comprising the appropriate information on the user equipments. It is obvious that such a solution is ineffective with regard to, e.g., the size of such a database and the updating and access of information.

Figure 9 shows a conceivable modification of the present invention where an arrangement 750 in the user equipment 75 itself is used as the storage media for various kinds of call information that is related to this user equipment. By this means, the method according to the present invention can base the selection decision for a candidate cell on more detailed information. However, it is apparent that such an arrangement 750 can likewise be applied in connection with other methods depending on the kind of information that is stored in the user equipment.

The arrangement 750 contains means 751 for determining and measuring an appropriate selection of parameters that relate to the call behaviour of the user equipment 75 and storing means 752 that store said parameters. Retrieving means 753 make the stored data accessible for the arrangement that handles the selection of a cell on one the available cell layers for a user equipment. Such information is gathered in certain situations, e.g., for call setup or a handover, and transferred to the network, either on request or at regularly times. With regard to the method according to the present invention it is by this means possible to determine the roaming indicator p more precisely, e.g., by means of retrieving the parameters average call length and mobility for this particular user equipment.

The description of the method and arrangement according to the present invention assumed hitherto that the layered cell structures belong to the same operator. Therefore, the initial selection of a certain cell layer is influenced by factors that allow the operator a more optimised use of its existing network resources. However, it is notwithstanding possible to assume layered cell structures that belong to different but co-operating network operators.

## Claims

1. A method in a unit of a cellular communication network (10) consisting of at least two layered cell structures (11,12), each of which using a distinct frequency band and overlapping each other in at least a certain geographical area (134), for selecting an initial cell layer from a set of cell alternatives (111, 121) on different layers within said area (134) for a user equipment (133) that intends to apply communication services in said area (134) and preliminarily selects one cell of said alternatives,
**characterised by**
determining (63,65) a first cost parameter by minimising a cost function that depends on the momentary load distribution in the set of alternative cells (111, 121) such that the first cost parameter for a cell represents the percentage of deviation of the actual load in said cell from the load that minimises said cost function;
determining (63,65) a second cost parameter by minimising of a cost function that depends on the number of handovers between cells on different cell layers (11,12) such that the second cost parameter for a cell represents a roaming indicator that considers the roaming area of the user equipment in relation to the coverage area of neighbour cells on the same layer;
assigning (66Yes,67) a cell to the user equipment (133) if said cell is more favourable with regard to the determined cost parameters than the preliminarily selected cell;
maintaining (66No) the preliminarily selected cell if there is no favourable cell amongst the alternative cells.

2. The method according to claim 1,
wherein the second cost parameter is neglected as long as it remains below an operator-definable threshold value.

3. The method according to claim 2,
wherein said threshold value is adjustable with respect to the total load in said set of cell alternatives such that an increasing load in the cells of the various cell layers will make the second selection criterion more tolerant.

4. The method according to one of the preceding claims,
wherein parameters that are specific for a user equipment (133) are retrieved from said user equipment (133) and applied by at least one of the cost criterions.

5. An arrangement (76) in a cellular communication network (70) consisting of at least two layered cell structures (71,72), each of which using a distinct frequency band and overlapping each other in a certain geographical area, for selecting an initial cell layer from a set of cell alternatives on different layers within said area for a user equipment (75) that intends to apply communication services in said area and preliminarily selects one cell of said alternatives,
**characterised in**
means (761) for receiving cell related information regarding cell load and neighbour coverage and for receiving an indication that a new user equipment enters the area that is covered by more than one various cell layers that are controlled by the arrangement,

means (762) for determining cost parameters for each cell of said set of cell alternatives by applying at least two cost criterions,

whereby a first cost parameter is determined by minimising a cost function that depends on the momentary load distribution in the set of alternative cells (111, 121) such that the first cost parameter for a cell represents the percentage of deviation of the actual load in said cell from the load that minimises said cost function and a second cost parameter is determined by minimising a cost function that depends on the number of handovers between cells on different cell layers (11,12) such that the second cost parameter for a cell represents a roaming indicator that considers the roaming area of the user equipment in relation to the coverage area of neighbour cells on the same layer,

means (763) for selecting an appropriate alternative cell or maintaining the preliminarily selected cell on basis of the determined cost parameters,

means (764) for transmitting the assignment of the candidate cell to the user equipment if the selection is confirmed.

**Patentansprüche**

1. Verfahren in einer Einheit eines zellularen Kommunikationsnetzes (10), welches aus wenigstens zwei geschichteten Zellenstrukturen (11, 12) besteht, welche jede ein gesondertes Frequenzband verwenden, und welche einander in wenigstens einem gewissen geographischen Bereich (134) überlappen, zum Auswählen einer Ausgangszellenschicht aus einem Satz von Zellenalternativen (111, 121), auf unterschiedlichen Schichten, innerhalb des Bereichs (134), für ein Benutzergerät (133), das beabsichtigt, Kommunikationsdienste in dem Bereich (134) anzuwenden, und vorläufig eine Zelle aus den Alternativen auswählt,
**gekennzeichnet durch**

Bestimmen (63, 65) eines ersten Kostenparameters **durch** Minimieren einer Kostenfunktion, die von der momentanen Lastverteilung in dem Satz alternativer Zellen (111, 121) abhängt, derart, dass der erste Kostenparameter für eine Zelle den Prozentanteil der Abweichung der tatsächlichen Last in der Zelle von der Last, welche die Kostenfunktion minimiert, darstellt;
Bestimmen (63, 65) eines zweiten Kostenparameters **durch** Minimieren einer Kostenfunktion, die von der Anzahl der Handovers zwischen Zellen auf unterschiedlichen Zellenschichten (11, 12) abhängt, derart, dass der zweite Kostenparameter für eine Zelle einen Roamingindikator, welcher den Roamingbereich des Benutzergeräts in Bezug zum Versorgungsbereich von Nachbarzellen auf derselben Schicht berücksichtigt, darstellt;
Zuweisen (66Ja, 67) einer Zelle für das Benutzergerät (133), wenn die Zelle günstiger ist, was die bestimmten Kostenparameter angeht, als die vorläufig ausgewählte Zelle;
Behalten (66Nein) der vorläufig ausgewählten Zelle, wenn es keine günstige Zelle unter den alternativen Zellen gibt.

2. Verfahren nach Anspruch 1,
wobei der zweite Kostenparameter vernachlässigt wird, solange er unter einem betreiberdefinierbaren Schwellenwert bleibt.

3. Verfahren nach Anspruch 2,
wobei der Schwellenwert anpassbar ist hinsichtlich der Gesamtlast in dem Satz von Zellenalternativen, derart, dass eine steigende Last in den Zellen der verschiedenen Zellenschichten das zweite Auswahlkriterium toleranter macht.

4. Verfahren nach einem der vorhergehenden Ansprüche,
wobei Parameter, die für ein Benutzergerät (133) spezifisch sind, aus dem Benutzergerät (133) abgefragt werden und von wenigstens einem der Kostenkriterien angewendet werden.

5. Anordnung (76) in einem zellularen Kommunikationsnetz (70), welches aus wenigstens zwei geschichteten Zellenstrukturen (71, 72) besteht, welche jede ein gesondertes Frequenzband verwenden, und welche einander in einem gewissen geographischen Bereich überlappen, zum Auswählen einer Ausgangszellenschicht aus einem Satz von Zellenalternativen, auf unterschiedlichen Schichten, innerhalb des Bereichs, für ein Benutzergerät (75), das beabsichtigt, Kommunikationsdienste in dem Bereich anzuwenden, und vorläufig eine Zelle aus den Alternativen auswählt,
**gekennzeichnet durch**

Mittel (761) zum Empfangen zellenbezogener Informationen, bezüglich Zellenlast und Nachbarversorgung, und zum Empfangen einer Anzeige, dass ein neues Benutzergerät in den Bereich eintritt, der von mehr als einer von verschiedenen Zellenschichten versorgt wird, die von der Anordnung gesteuert werden,
Mittel (762) zum Bestimmen von Kostenparametern für jede Zelle des Satzes von Zellenalternativen, **durch** Anwenden von wenigstens zwei Kostenkriterien, wobei ein erster Kostenparameter **durch** Minimieren einer Kostenfunktion bestimmt wird, die von der momentanen Lastverteilung in dem Satz alternativer Zellen (111, 121) abhängt, derart, dass der erste Kostenparameter für eine Zelle den Prozentanteil der Abweichung der tatsächlichen Last in der Zelle von der Last, welche die Kostenfunktion minimiert, darstellt, und ein zweiter Kostenparameter **durch** Minimieren einer Kostenfunktion bestimmt wird, die von der Anzahl der Handovers zwischen Zellen auf unterschiedlichen Zellenschichten (11, 12) abhängt, derart, dass der zweite Kostenparameter für eine Zelle einen Roamingindikator, welcher den Roamingbereich des Benutzergeräts in Bezug zum Versorgungsbereich von Nachbarzellen auf derselben Schicht berücksichtigt, darstellt,
Mittel (763) zum Auswählen einer geeigneten alternativen Zelle oder Behalten der vorläufig ausgewählten Zelle auf Basis der bestimmten Kostenparameter,
Mittel (764) zum Senden der Zuweisung der Kandidatenzelle für das Benutzergerät, wenn die Auswahl bestätigt wird.

## Revendications

1. Procédé, dans une unité d'un réseau de communication cellulaire (10) constitué par au moins deux structures de cellules en couches (11, 12) dont chacune utilise une bande de fréquences distincte et chevauche les autres dans au moins une certaine zone géographique (134), pour sélectionner une couche de cellules initiale parmi un jeu d'alternatives de cellules (111, 121) sur des couches différentes à l'intérieur de ladite zone (134) pour un équipement d'utilisateur (133) qui tente d'appliquer des services de communication dans ladite zone (134) et qui sélectionne préliminairement une cellule desdites alternatives,
**caractérisé par**:

la détermination (63, 65) d'un premier paramètre de coût en minimisant une fonction de coût qui dépend de la distribution de charge momentanée dans le jeu de cellules alternatives (111, 121) de telle sorte que le premier paramètre de coût pour une cellule représente le pourcentage de la déviation de la charge réelle dans ladite cellule par rapport à la charge qui minimise ladite fonction de coût;
la détermination (63, 65) d'un second paramètre de coût en minimisant une fonction de coût qui dépend du nombre de transferts entre des cellules sur des couches de cellules différentes (11, 12) de telle sorte que le second paramètre de coût pour une cellule représente un indicateur de roaming qui considère la zone de roaming de l'équipement d'utilisateur en relation avec la zone de couverture de cellules voisines sur la même couche;
l'assignation (66Yes, 67) d'une cellule à l'équipement d'utilisateur (133) si ladite cellule est davantage favorable, en tenant compte des paramètres de coût déterminés, que la cellule sélectionnée préliminairement; et
le maintien (66No) de la cellule sélectionnée préliminairement s'il n'y a pas de cellule favorable parmi les cellules alternatives.

2. Procédé selon la revendication 1, dans lequel le second paramètre de coût est négligé aussi longtemps qu'il reste au-dessous d'une valeur de seuil définissable par opérateur.

3. Procédé selon la revendication 2, dans lequel ladite valeur de seuil est réglable par rapport à la charge totale dans ledit jeu d'alternatives de cellules de telle sorte qu'une charge croissante dans les cellules des diverses couches de cellules rende davantage tolérant le second critère de sélection.

4. Procédé selon l'une quelconque des revendications précédentes, dans lequel des paramètres qui sont spécifiques pour un équipement d'utilisateur (133) sont retrouvés à partir dudit équipement d'utilisateur (133) et sont appliqués au moyen d'au moins l'un des critères de coût.

5. Agencement (76) dans un réseau de communication cellulaire (70) constitué par au moins deux structures de cellules en couches (71, 72) dont chacune utilise une bande de fréquences distincte et elles se chevauchent mutuellement dans une certaine zone géographique, pour sélectionner une couche de cellules initiale parmi un jeu d'alternatives de cellules sur des couches différentes à l'intérieur de ladite zone pour un équipement d'utilisateur (75) qui tente d'appliquer des services de communication dans ladite zone et qui sélectionne préliminairement une cellule desdites alternatives, **caractérisée par**:

un moyen (761) pour recevoir une information rapportée à la cellule concernant une charge de cellule et une couverture voisine et pour recevoir une indication du fait qu'un nouvel équipement d'utilisateur entre dans la zone qui est couverte par plus d'une des diverses couches de cellules qui sont commandées par l'agencement;
un moyen (762) pour déterminer des paramètres de coût pour chaque cellule dudit jeu d'alternatives de cellules en appliquant au moins deux critères de coût et ainsi, un premier paramètre de coût est déterminé en minimisant une fonction de coût qui dépend de la distribution de charge momentanée dans le jeu de cellules alternatives (111, 121) de telle sorte que le premier paramètre de coût pour une cellule représente le pourcentage de déviation de la charge réelle dans ladite cellule par rapport à la charge qui minimise ladite fonction de coût et un second paramètre de coût est déterminé en minimisant une fonction de coût qui dépend du nombre de transferts entre des cellules sur des couches de cellules différentes (11, 12) de telle sorte que le second paramètre de coût pour une cellule représente un indicateur de roaming qui considère la zone de roaming de l'équipement d'utilisateur en relation avec la zone de couverture de cellules voisines sur la même couche;

un moyen (763) pour sélectionner une cellule alternative appropriée ou pour maintenir la cellule sélectionnée de façon préliminaire sur la base des paramètres de coût déterminés; et

un moyen (764) pour transmettre l'assignation de la cellule de candidat à l'équipement d'utilisateur si la sélection est confirmée.

Fig. 1

Fig. 2

Fig. 3a

Fig. 3b

Fig. 4a

Fig. 4b

Fig. 5

```
                              ●
                             ↓↓
                    ┌────────▼▼────────────────────────────────┐
                    │              ╱◆╲              ⌒61         │
              No    │         ╱  new UE in  ╲                   │
            ◄───────┼────────◄    cell Ci    ►                 │
                    │         ╲      ?      ╱                   │
                    │           ╲◆╱                             │
                    │             │                            │
                    │            Yes                           │
                    │             │                            │
                    │    ┌────────▼─────────┐                  │
                    │    │ select cell Ci for UE │  ⌐62        │
                    │    └────────┬─────────┘                  │
                    │             │                            │
                    │    ┌────────▼─────────┐                  │
                    │    │ determine cost   │  ⌐63             │
                    │    │ parameters for cell Ci │            │
                    │    └────────┬─────────┘                  │
                    │             │            ⌒64             │
                    │           ╱◆╲                            │
                    │        ╱ alternative ╲      No           │
                    │       ◄ cells available ►───────────────►●
                    │        ╲      ?      ╱                   ▲
                    │           ╲◆╱                            │
                    │            Yes                           │
                    │             │                            │
                    │  ┌──────────▼──────────┐                 │
                    │  │ determine cost parameters │ ⌐65       │
                    │  │  for the alternative cells │          │
                    │  └──────────┬──────────┘                 │
                    │             │           ⌒66             │
                    │           ╱◆╲                            │
                    │        ╱ better suitable ╲    No         │
                    │       ◄ cell determined   ►─────────────►●
                    │        ╲      ?      ╱                   ▲
                    │           ╲◆╱                            │
                    │            Yes                           │
                    │             │                            │
                    │    ┌────────▼─────────┐                  │
                    │    │ select alternative cell │ ⌐67       │
                    │    │        for UE    │                  │
                    │    └────────┬─────────┘                  │
                    └─────────────┴────────────────────────────┘
```

# Fig. 6

15

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0888026 A2

- EP 1014107 A2